# EUROPÄISCHE PATENTSCHRIFT

(11) **EP 3 467 303 B1**
(45) Veröffentlichungstag und Bekanntmachung des Hinweises auf die Patenterteilung: **21.07.2021**
(21) Anmeldenummer: 18194966.0
(22) Anmeldetag: 18.09.2018
(51) Int. Cl.: F03D 1/06, F03D 17/00

(54) **SYSTEM UND VERFAHREN ZUR ÜBERWACHUNG EINER FLANSCHVERBINDUNG EINER WINDENERGIEANLAGE**
METHOD AND SYSTEM FOR MONITORING A FLANGE CONNECTION OF A WIND ENERGY PLANT
SYSTÈME ET PROCÉDÉ DE SURVEILLANCE D'UN RACCORD À BRIDE D'UNE ÉOLIENNE

(30) Priorität: 20.09.2017 DE 102017008782
(43) Veröffentlichungstag der Anmeldung: 10.04.2019
(73) Patentinhaber: Siemens Gamesa Renewable Energy Service GmbH, 22297 Hamburg (DE)
(72) Erfinder: FUGLSANG-PETERSEN, Jochen, 24613 Aukrug (DE); NACK, Christoph, 24782 Büdelsdorf (DE)
(74) Vertreter: Schlotter, Alexander Carolus Paul

(56) Entgegenhaltungen:
- CN-U- 201 812 361
- DE-A1-102013 218 845
- DE-A1-102015 212 906
- GB-A- 2 463 081
- US-A1- 2017 022 978

## Beschreibung

Die Erfindung betrifft ein System und ein Verfahren zur Überwachung einer, insbesondere dynamisch hochbelasteten, Flanschverbindung einer Windenergieanlage. Die Erfindung betrifft ferner eine Windenergieanlage.

Windenergieanlagen sind hochgradig dynamisch belastete Maschinen mit im Maschinenbau ansonsten nur sehr selten auftretenden Schwingspielzahlen von 10⁹ Lastwechseln. Diese Dynamik führt zu einer sehr starken Materialermüdung. Aus logistischen Gründen können die Hauptkomponenten einer Windenergieanlage allerdings erst auf der Baustelle montiert werden. Dies bedeutet, dass die kompletten Belastungen aus dem Windrotor über lösbare Verbindungen, üblicherweise Flanschverbindungen mit Schraubbolzen, übertragen werden müssen. Die hochbelasteten Flanschverbindungen umfassen die Turmflansche, das Turmkopflager, die Auflager von Welle und Getriebe, die Verbindung von Rotorwelle und Rotornabe sowie die Verbindung der Rotorblätter über die Blattlager mit der Rotornabe. Diese Flanschverbindungen weisen unvermeidliche Schwachstellen in Form von Bolzenlöchern auf.

Beispielsweise stellen Rotorblattlager die blattwurzelseitigen Befestigungen der Rotorblätter an der Rotornabe dar. Diese Bauteile sind im Betrieb der Windenergieanlage hochbelastet und können im Schadensfall zu schwerwiegenden Problemen bis zum Rotorblattabwurf führen.

Eine typische Bauform von Rotorblattlagern weist zwei über Wälzkörper drehbar miteinander verbundene Lagerringe auf, die jeweils mit Bohrlöchern zur Aufnahme von Verbindungsbolzen bzw. Rotorblattanschlussbolzen versehen sind. Diese Bohrlöcher sind gleichzeitig Schwachstellen der Rotorblattlager.

Die Inspektion von Rotorblattlagern ist aufgrund ihrer mangelnden Zugänglichkeit besonders aufwendig und nur eingeschränkt möglich. Risse im Rotorblattlager sind daher nur schwierig, wenn überhaupt, feststellbar, bevor sie zu einem Versagen des Rotorblattlagers führen. Ähnliches gilt auch für andere Flanschverbindungen von Windenergieanlagen.

In diesem Zusammenhang sind aus der unter der Nummer DE 10 2013 218 845 A1 veröffentlichten deutschen Patentanmeldung der Anmelderin eine Vorrichtung und ein Verfahren zur Überwachung einer dynamisch hochbelasteten Flanschverbindung einer Windenergieanlage bekannt. Die Vorrichtung umfasst einen in form- und/oder kraftschlüssiger Anlage auf einen Bolzenkopf oder eine Bolzenmutter eines Bolzens montierbaren Überwachungskörper mit einer zentralen Aufnahme für den Bolzenkopf oder die Bolzenmutter. Der Überwachungskörper ist eine Art "Mutternkappe" und ist ausgebildet, bei einer Beschädigung oder Zerstörung eines oder einer in der zentralen Aufnahme angeordneten Bolzenkopfes oder Bolzenmutter beschädigt zu werden. Am Überwachungskörper ist ein Sensor angeordnet, der zur Feststellung einer strukturellen Integrität des Überwachungskörpers ausgebildet ist Ein weiteres Beispiel aus dem Stand der Technik ist in DE102015212906A1 offenbart.

Durch die Überwachung mit der "Mutternkappe" ist es möglich, eine automatische Anlagenabschaltung einzuleiten, wenn ein kritischer Lagerriss auftritt, der im Falle des Rotorblattlagers im schlimmsten Fall zum Blattabwurf führen könnte. Hierbei werden gerissene Bolzenmuttern oder Bolzenköpfe als Indikatoren für Risse in der Flanschverbindung bzw. im Lager verwendet. Ein Riss im Rotorblattlager führt beispielsweise dazu, dass der Rotorblattbolzen und die darauf festgeschraubte Mutter bei einem Lagerriss überproportional belastet werden und daher dieses zu einem Riss in der Blattmutter oder gegebenenfalls einem Bolzenkopf führt. Es kann auch vorkommen, dass die Blattmutter vom Rotorbolzen gestreift wird. Entsprechendes gilt auch für andere versagende Flanschverbindungen von Windenergieanlagen. Diese Überwachungsoption wird als Senvion CMBB Zustandsüberwachung in Windenergieanlagen eingesetzt.

Der vorliegenden Erfindung liegt demgegenüber die Aufgabe zugrunde, die Überwachung von Flanschverbindungen einer Windenergieanlage zu verbessern.

Diese Aufgabe wird durch ein System zur Überwachung einer Flanschverbindung einer Windenergieanlage gelöst, umfassend eine Flanschverbindung mit einer Mehrzahl von zueinander benachbart in Öffnungen eines Flansches angeordneten Bolzen, die mit Bolzenmuttern und/oder Bolzenköpfen befestigt sind, sowie eine Mehrzahl von Überwachungskörpern, die auf Bolzenmuttern und/oder Bolzenköpfen von mehreren, insbesondere zueinander benachbarten, Bolzen in form- und/oder kraftschlüssiger Anlage montiert sind, wobei die Überwachungskörper über Verbindungskabel miteinander zu einer Schaltung, insbesondere Reihenschaltung verbunden sind, das dadurch weitergebildet ist, dass die Anordnung der Überwachungskörper auf den Bolzenmuttern und/oder Bolzenköpfen und die Länge der Verbindungskabel so gewählt sind, dass bei Rotation einer sich lockernden Bolzenmutter oder eines Bolzenkopfes eines sich lockernden Bolzens und des darauf montierten Überwachungskörpers wenigstens ein mit dem sich mitdrehenden Überwachungskörper verbundenes Verbindungskabel aufgrund steigender Zugspannung auf dem Verbindungskabel gelöst wird, insbesondere bei Überschreitung eines Zugspannungsgrenzwerts. Durch das Lösen des Verbindungskabels wird erfindungsgemäß eine Fehlermeldung in einer mit der Schaltung verbundenen Steuer- oder Kontrolleinrichtung ausgelöst.

Hiermit wird gewährleistet, dass ein Vorspannungsverlust einzelner Bolzen einer hochbelasteten Flanschverbindung frühzeitig entdeckt wird, bevor es zu einem Versagen der gesamten Flanschverbindung kommen kann. Vorspannungsverluste in solchen Flanschverbindungen treten bei Windenergieanlagen vereinzelt auf und können sowohl auf Anwendungsfehler wie beispielsweise fehlerhafte Montage oder ein fehlerhaftes Vorspannungsverfahren als auch auf Materialfehler oder Konstruktionsfehler, etwa durch konstruktionsbedingte Überlastung, zurückzuführen sein.

Außerdem wird gewährleistet, dass eine Rissbildung in einer, insbesondere dynamisch hochbelasteten, Flanschverbindung nicht aus dem Grund unentdeckt bleibt, dass sich einzelne Bolzen und/oder Bolzenmuttern lockern. Vereinzelt kann es zu losen Blattlagerverschraubungen durch Fehler bei der Montage und Wartung, undefinierte Schmierzustände oder auch grenzwertige konstruktive Auslegung der Flanschverbindungen kommen. Eine fehlende oder unzureichende Vorspannung der Verschraubung stellt ein Risiko für das sichere Detektieren von u.a. Blattlagerrissen bei der Verwendung des bisherigen Systems dar, denn gelockerte Bolzen oder Bolzenmuttern werden bei Rissbildung nicht in der gleichen Art und Weise wie ordnungsgemäß befestigte Bolzen oder Bolzenmutter mit der Verformungskraft des reißenden Flansches beaufschlagt. So könnte ein Riss sich ausbreiten, ohne dass dies detektiert wird.

Das System bezieht sowohl Flanschverbindungen mit Stehbolzen ein, die mit Bolzenmuttern gesichert werden, als auch solche mit Schraubbolzen, die in ein Flanschloch mit passendem Innengewinde eingeschraubt werden. Stehbolzenverbindungen weisen pro Stehbolzen mindestens eine Bolzenmutter auf, Schraubbolzen einen Bolzenkopf und gegebenenfalls eine Bolzenmutter, letzteres im Falle einer Durchsteckverschraubung.

Einem unbemerkten Vorspannungsverlust wirkt das System gemäß der vorliegenden Erfindung entgegen, indem es in Bezug auf die Positionierung der Überwachungskörper auf den Bolzenköpfen oder Bolzenmuttern und die Verkabelung zwischen den benachbarten Überwachungskörpern nunmehr so ausgelegt wird, dass eine Lockerung eines Bolzens oder einer Bolzenmutter auf einem Bolzen des Flansches dadurch erkannt wird, dass die Verkabelung zu wenigstens einem benachbarten Bolzen unterbrochen wird. Dadurch wird ein Stromfluss oder eine leitende Verbindung in dem System unterbrochen, was zu einem Signal führt, welches den entsprechenden Vorgang indiziert. Im einfachsten Fall erfolgt dies mittels einer Reihenschaltung, aber auch bei einer Parallelschaltung kann z.B. eine plötzliche Stromänderung durch eine unterbrochene Verkabelung mittels einer elektronischen Schaltung erkannt werden.

Da Bolzenmuttern auf Bolzen oder Bolzen an sich üblicherweise durch eine Drehung im Uhrzeigersinn festgezogen werden und eine Lockerung eine Drehung im Gegenuhrzeigersinn bedeutet, ist auch die Richtung der Drehung der Bolzen bzw. Bolzenmuttern bei einer Lockerung derselben wohldefiniert, so dass die geometrische Anordnung und Verkabelung zwischen den Überwachungskörpern entsprechend gewählt werden kann.

In einer vorteilhaften Weiterbildung sind die Überwachungskörper so ausgebildet, dass bei einer Beschädigung oder Zerstörung einer Bolzenmutter oder eines Bolzenkopfes auch der auf der Bolzenmutter oder dem Bolzenkopf montierte Überwachungskörper beschädigt wird, wobei die Überwachungskörper jeweils einen Sensor aufweisen, der zur Feststellung einer strukturellen Integrität des Überwachungskörpers ausgebildet ist, wobei die Verbindungskabel zwischen den Überwachungskörpern die Sensoren an den Überwachungskörpern miteinander verbinden. Diese Maßnahme erweitert die Kontrolle der Flanschverbindung um die Möglichkeit, zerstörte Bolzen bzw. Bolzenmuttern frühzeitig zu detektieren und so die betroffene Windenergieanlage in einen sicheren Anlagenzustand zu versetzen, insbesondere stillzusetzen. Dazu sind die Überwachungskörper um jeweils einen Sensor erweitert, bspw. eine den Überwachungskörper umrundende Leitung, die bei einer Zerstörung des Überwachungskörpers unterbrochen wird. Die Reihenschaltung der Überwachungskörper wird somit auf eine Reihenschaltung der Sensoren an den Überwachungskörpern erweitert, so dass sowohl die Zerstörung von Bolzen, Bolzenköpfen oder Bolzenmuttern als auch die Lockerung derselben überwacht wird.

Bei der Installation ist darauf zu achten, dass gewöhnliche Vibrationen beim Betrieb der Windenergieanlage nicht zu einer Trennung der Verkabelung führt, während bereits eine relativ geringfügige Lockerung des Bolzens oder der Bolzenmutter zu einer Trennung führt. Die Verkabelung sollte daher nach ordnungsgemäßer Installation keine Zugspannung auf den Verbindungskabeln aufweisen. Vorzugsweise sind somit die Verbindungskabel ohne Zugkraft installiert, solange sich keine Bolzenmutter oder kein Bolzen lockert. Andererseits ist vorteilhafterweise vorgesehen, dass eine Rotation einer sich lockernden Bolzenmutter oder eines Bolzenkopfes eines sich lockernden Bolzens von 70°, insbesondere von 40°, insbesondere bevorzugt von 15°, gegenüber einer Ausgangsposition der Bolzenmutter oder des Bolzenkopfes nicht überschritten wird, bevor das Verbindungskabel gelöst wird. Hiermit wird sichergestellt, dass es nicht zu einer unzulässigen Abnahme der Spannkraft der Bolzenverbindung kommt, die dazu führt, dass ein Riss im Flansch nicht mehr zu detektieren wäre.

In einer vorteilhaften Ausführung sind die Verbindungskabel mit einer Sollbruchstelle ausgestattet. Eine solche Sollbruchstelle kann so ausgestaltet sein, dass sie bei einer definierten Zugkraft nachgibt. Alternativ oder zusätzlich hierzu, etwa im Sinne einer zusätzlichen Sicherung, sind vorteilhafterweise die Verbindungskabel mittels Steckverbindern in den Verbindungskabeln oder an den Sensoren verbindbar oder verbunden, die sich bei steigender axialer Zugspannung lösen. In vorteilhaften Ausgestaltungen hierzu weisen die Steckverbinder Feder-Nut-Verbindungen oder magnetische Verbindungen auf, die sich bei Überschreiten eines Zugspannungsgrenzwerts, insbesondere zerstörungsfrei, lösen.

Eine besonders hohe Detektionssicherheit wird vorteilhafterweise erreicht, wenn sich bei einer Drehung einer sich lockernden Bolzenmutter oder eines Bolzenkopfes eines sich lockernden Bolzens die Verbindungskabel des sich mitdrehenden Überwachungskörpers und/oder Sensors zu zwei benachbarten Überwachungskörpern und/oder Sensoren lösen, die in einer Schaltung, insbesondere Reihenschaltung der Überwachungskörper und/oder Sensoren vor und hinter dem sich mitdrehenden Überwachungskörper und/oder Sensor angeordnet sind. Dies bedeutet im Rahmen der Erfindung, dass bei einem Überwachungskörper mit oder ohne Sensor an einer Bolzenmutter oder einem Bolzenkopf, der mit Überwachungskörpern mit oder ohne Sensoren an zwei benachbarten Bolzenmuttern oder Bolzenköpfen verschaltet ist, die Überwachungskörper bzw. Sensoren derart miteinander verkabelt sind, dass sich bei einer Lockerung der Bolzenmutter bzw. des Bolzens die Verkabelung zu beiden Seiten hin löst. Aufgrund der geometrischen Verhältnisse kann es allerdings sein, dass diese Lösung nicht gleichzeitig erfolgt, sondern beispielsweise ein Verbindungskabel sich bei einer Rotation von 15° und ein zweites Verbindungskabel sich bei einer Rotation von 25° der Lockerung der mittleren Bolzenmutter bzw. des mittleren Bolzens löst.

Vorteilhafterweise sind die Verbindungskabel auf eine Kabellänge konfektioniert, die etwas länger ist als ein ungünstigster Fall bei einer 60°-Rasterung, insbesondere einer 30°-Rasterung, des Überwachungskörpers zur Montage auf einem Bolzenkopf oder eine Bolzenmutter, insbesondere einer Sechskantmutter oder einem Sechskantbolzenkopf. Das zur Verfügung stehende Spiel ist dabei allerdings bevorzugt so zu wählen, dass eine Verbindung zwischen benachbarten Überwachungskörpern nicht mehr möglich ist, wenn die nächste Rastposition der 60°-Rasterung oder 30°-Rasterung auf dem Bolzenkopf oder der Bolzenmutter eingenommen würde.

Da Bolzenmuttern üblicherweise als Sechskantmuttern ausgebildet sind, die in einem Flansch im befestigten Zustand in einer nicht vordefinierten Lagebeziehung zueinander stehen, muss die Länge der Verbindungskabel so sein, dass auch der ungünstigste Fall einer maximal möglichen Entfernung zwischen den Anschlüssen zweier Sensoren ohne Zugspannung auf dem Verbindungskabel zwischen diesen beiden Sensoren überbrückt werden kann. Wenn der Überwachungskörper ebenfalls passgenau als Sechskant ausgebildet ist, ergibt sich ein Winkelbereich von 60°, in dem die Anschlüsse des jeweiligen Sensors bei einer ansonsten regelmäßigen Anordnung der Sensoren auf den benachbarten Bolzenmuttern liegen können. Falls der Überwachungskörper allerdings eine 12-strahlige Rotationssymmetrie hat anstelle einer 6-strahligen Rotationssymmetrie, beträgt dieser Winkelbereich nur noch 30°. Damit lässt sich die Lagebeziehung benachbarter Sensoren zueinander mit weniger Spiel zueinander bei der Installation einstellen. Dieses Prinzip kann im Rahmen der vorliegenden Erfindung auch mit noch feinerer Teilung angewendet werden, um einen Vorspannungsverlust noch früher zu erkennen. Hier bieten sich beispielsweise eine 18- oder 24-strahlige Rotationssymmetrie an, die dann mit Winkelbereichen von 20° bzw. 15° einhergehen.

Die der vorliegenden Erfindung zugrundeliegende Aufgabe wird auch durch eine Windenergieanlage mit einem zuvor beschriebenen erfindungsgemäßen System zur Überwachung einer Flanschverbindung gelöst. Diese erfindungsgemäße Windenergieanlage vereinigt auf sich die gleichen Eigenschaften, Merkmale und Vorteile wie das erfindungsgemäße System, das dementsprechend Teil der Windenergieanlage ist.

Ferner wird die der vorliegenden Erfindung zugrunde liegende Aufgabe auch durch ein Verfahren zum Überwachen einer Flanschverbindung einer Windenergieanlage gelöst, wobei eine oder mehrere Überwachungskörper in einem zuvor beschriebenen erfindungsgemäßen System auf eine oder mehrere Bolzenmuttern und/oder Bolzenköpfe wenigstens einer Flanschverbindung einer Windenergieanlage montiert werden und und eine Schaltung, insbesondere Reihenschaltung der Überwachungskörper mit Verbindungskabeln so hergestellt wird, dass bei Rotation einer sich lockernden Bolzenmutter oder eines Bolzenkopfes eines sich lockernden Bolzens und des darauf montierten Überwachungskörpers wenigstens ein mit dem sich mitdrehenden Überwachungskörper verbundenes Verbindungskabel aufgrund steigender Zugspannung auf dem Verbindungskabel gelöst wird, wobei bei Lockerung einer Bolzenmutter oder eines Bolzens ein Fehler in der Flanschverbindung signalisiert wird. Auch das erfindungsgemäße Verfahren verkörpert somit die gleichen Merkmale, Vorteile und Eigenschaften wie das erfindungsgemäße System.

Vorzugsweise wird die strukturelle Integrität der Überwachungskörper mittels eines oder mehrerer Sensoren an den Überwachungskörpern überwacht, wobei bei Beschädigung oder Zerstörung eines oder mehrerer Überwachungskörper ein Fehler in der Flanschverbindung signalisiert wird.

Vorteilhafterweise wird bei Signalisierung einer Beschädigung der Flanschverbindung die Windenergieanlage stillgesetzt. Dies ermöglicht eine zeitnahe Wartung und gegebenenfalls Reparatur der betroffenen Flanschverbindung.

Vorzugsweise werden mehrereSensoren in Reihe betrieben oder in Gruppen gruppiert, insbesondere auch Gruppen von Reihenschaltungen eingerichtet. Die Gruppierung der Überwachungskörper und/oder Sensoren erlaubt eine schnelle Übersicht darüber, welcher Abschnitt einer Flanschverbindung von einer sich lockernden Bolzenmutter, einem sich lockernden Bolzen oder einem Riss betroffen ist.

In einer Ausführungsform des Verfahrens ist vorgesehen, dass ein Sensor bei Beschädigung oder Zerstörung eines Überwachungskörpers oder Trennung von einem Verbindungskabel ein Signal aussendet oder eine Beschädigung festgestellt wird, wenn ein Sensor aufgrund einer Unterbrechung seines elektrischen Leiters bei einer Überwachung nicht erkannt wird oder ein kontinuierlich anstehendes Signal unterbrochen wird.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
Fig. 1 eine schematische Darstellung eines Maschinenhauses einer Windenergieanlage,
Fig. 2a) - 2d) schematische Darstellung eines Überwachungskörpers und Sensors,
Fig. 3 eine beispielhafte Verkabelung von Sensoren,
Fig. 4 eine weitere beispielhafte Verkabelung von Sensoren,
Fig. 5 eine schematische Darstellung einer bekannten Steckverbindung,
Fig. 6 eine schematische Darstellung einer erfindungsgemäß einsetzbaren Steckverbindung und
Fig. 7a), 7b) eine schematische Darstellung einer erfindungsgemäß einsetzbaren magnetischen Steckverbindung.

In den Zeichnungen sind jeweils gleiche oder gleichartige Elemente und/oder Teile mit denselben Bezugsziffern versehen, so dass von einer erneuten Vorstellung jeweils abgesehen wird.

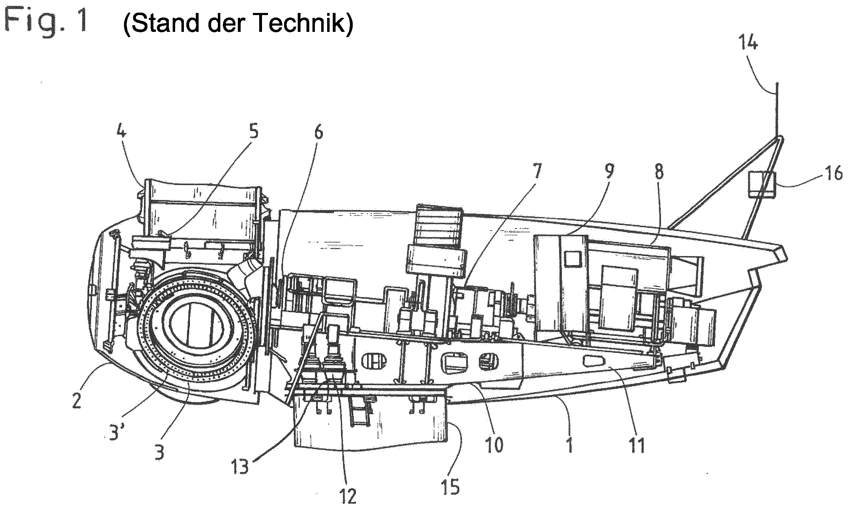

In Fig. 1 ist ein Maschinenhaus 1 bzw. eine Gondel einer Windenergieanlage schematisch von der Seite dargestellt. An das Maschinenhaus 1 schließt sich eine Rotornabe 2 mit drei Rotorblattanschlüssen mit Rotorblattlagern 3 für Rotorblätter 4 an. Ein Rotorblatt 4 ist mit seinem blattwurzelseitigen Ende ebenfalls dargestellt. Die Rotorblattanschlüsse weisen jeweils Flansche zum Anschluss eines Rotorblatts 4 und Blattwinkelverstellvorrichtungen zur Einstellung und Feststellung des Rotorblattwinkels auf. Ein am Flansch montiertes und mit einer Verkleidung abgedecktes Rotorblattlager ist mit dem Bezugszeichen 5 versehen. Zur Verschraubung eines Rotorblatts 4 am Rotorblattlager 3 weisen die Rotorblattlager 3 umlaufend eine Vielzahl von Bohrungen 3' zur Aufnahme von Schraubbolzen bzw. Rotorblattbolzen auf.

Innerhalb des Maschinenhauses 1 schließt sich an die Rotornabe 2 eine Lagerung 6 einer langsamen Rotorwelle an, die direkt mit der Rotornabe 2 verbunden ist. Die langsame Welle ist mit einem Getriebe 7 verbunden, mit dem die Drehzahl der langsamen Rotorwelle heraufgesetzt und auf eine schnelle Welle übertragen wird. Die schnelle Welle, die sich an das Getriebe 7 anschließt, führt zu einem Generator 8, der am heckseitigen Ende der Gondel 1 angeordnet ist. Ebenfalls dargestellt ist eine elektronische Steuervorrichtung 9 mit einem Umrichter, der den durch den Generator 8 erzeugten elektrischen Strom so anpasst, dass er in ein privates oder öffentliches Stromnetz eingespeist werden kann.

Im unteren Bereich des Maschinenhauses 1 ist ein Maschinenträger mit einem Hauptträger 10 und einem Heckträger 11 dargestellt. Der Hauptträger 10 unterstützt die Lagerung 6 der langsamen Welle sowie die Rotornabe 2 und das Getriebe 7. Der Heckträger 11 trägt elektrische Komponenten wie den Generator 8, Steuerungs- und Schaltschränke sowie gegebenenfalls einen Transformator und den Umrichter.

Zur azimutalen Drehung, das heißt zur Drehung des Maschinenhauses 1 auf der Längsachse des Turms 15, sind am Hauptträger 10 mehrere, üblicherweise zwischen vier und sechzehn Azimutantriebe 12 angeordnet, die über ein Zahnrad und Zahnkranzgetriebe das Maschinenhaus 1 auf dem Turm 15 drehen. Außerdem sind dazu benachbart Azimutbremsen 13 ausgebildet, die die Azimutantriebe 12 entlasten. Sie halten das Maschinenhaus 1 in einer festen azimutalen Position, sobald eine Azimutsollposition eingenommen ist. Während einer Azimutverstellung werden sie mit einem Restdruck beaufschlagt, um die Azimutantriebe 12 von äußeren Einflüssen zu entkoppeln.

Das Maschinenhaus 1 verfügt an seinem heckseitigen Ende außerdem über Windsensorik, beispielsweise ein Anemometer 16, und einen Blitzschutz 14. Ein weiterer, nicht dargestellter Blitzschutz ist üblicherweise im Bereich des Übergangs zwischen dem Maschinenhaus 1 und der Rotornabe 2 angeordnet, um Blitzeinschläge aus dem Rotorblatt 4 in den Turm 15 abzuleiten.

In den folgenden Figuren wird die Erfindung anhand eines als Flanschverbindung ausgebildeten Rotorblattlagers erklärt. Diese Ausführungen sind ohne weiteres auf eine sehr vorteilhafte Überwachung eines zwischen dem Turmkopf und dem Maschinenhaus angeordneten Azimutlagers übertragbar, welches in Funktion und Aufbau einem Blattlager sehr ähnlich ist.

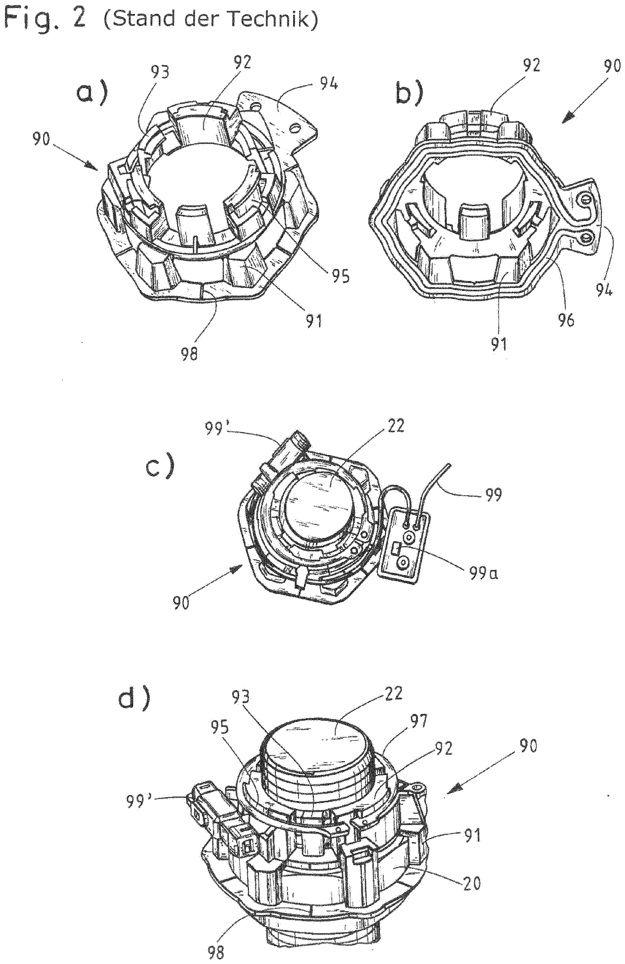

Fig. 2a) bis 2d) zeigt ein Ausführungsbeispiel einer aus DE 10 2013 218 845 A1 bekannten Vorrichtung. In den Fig. 2a) und 2b) sind obere und untere schematische perspektivische Darstellungen eines Mutternaufsatzes 91 eines Überwachungskörpers 90 dargestellt. Im unteren Bereich umfasst dieser einen umlaufenden Steg sowie Sollbruchstellen 98 auf dem Steg. Im oberen Bereich weist das Bolzenaufnahmeteil 92 ein Arretierelement 93 mit einer nach innen gewandten Nase und nach außen gewandten Haltestrukturen 95 für einen Sprengring auf. Der Mutternaufsatz 91 weist eine Halterung 94 für Kontaktierung und Platine auf. An der Unterseite des Steges ist eine Beschichtung eines elektrischen Leiters 96 dargestellt.

Für die erfindungsgemäße Überwachung eines Vorspannungsverlusts kann in der einfachsten Form ein Überwachungskörper ohne Leiterbeschichtung oder Sensor verwendet werden. In diesem Fall funktioniert der Überwachungskörper als Kabelträger für die Verbindungskabel zu den jeweils benachbarten Bolzen. Die Enden der Verbindungskabel sind dann leitend miteinander verbunden.

Die zusätzliche Überwachung des Vorspannungsverlusts und der strukturellen Integrität der Überwachungskörper ermöglicht darüber hinaus jedoch eine sichere Überwachung der beiden Hauptversagensmechanismen einer dynamisch hochbelasteten Schraubverbindung.

Die Fig. 2c) und 2d) zeigen den Überwachungskörper 90 am Bolzen 22 und mit Sprengring 97. Ebenfalls dargestellt sind ein Anschlussstecker 99' sowie eine Platine mit einer Niederstrom-LED 99a und einer Verkabelung 99. Die LED 99a dient dazu, beschädigte Bolzenmuttern 20 zu lokalisieren.

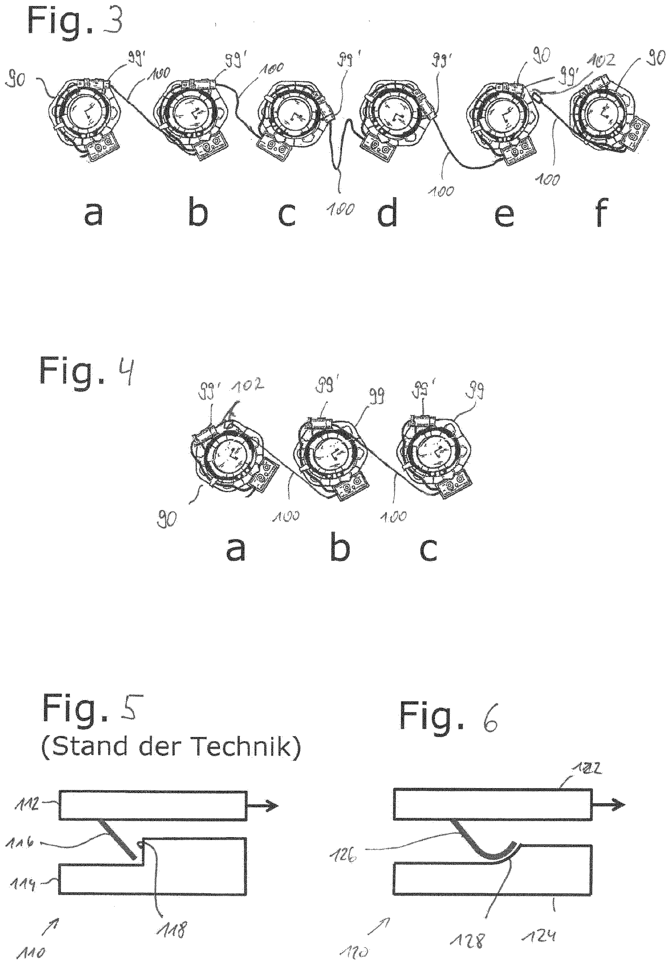

In Figur 3 ist eine beispielhafte Verkabelung von sechs benachbarten Mutternkappen bzw. Überwachungskörpern 90 an Positionen a bis f gezeigt. Dargestellt sind die Bolzenpositionen in einer Linie. In den meisten Anwendungsfällen in Windenergieanlagen befinden sich die Bolzen auf einem Lochkreis mit einem vorbestimmten Radius, beispielsweise zwischen 1 und 4 m Länge.

Die Bolzenmuttern befinden sich jeweils in verschiedenen Mutternpositionen. Dabei können die Überwachungskörper 90 je nach zufälliger Mutternposition nach dem vorschriftsmäßigen Vorspannen der Bolzen auf den Sechskantmuttern prinzipiell in jeweils sechs verschiedenen Positionen aufgesetzt werden, die sich um jeweils 60° voneinander unterscheiden. Aus Platzgründen werden im Wesentlichen einheitliche Ausrichtungen der Sensoren bzw. Überwachungskörper 90 bevorzugt.

In Figur 3 sind jeweils die extremen Positionen benachbarter Muttern dargestellt. Zwischen den Positionen a und b ist die vorbestimmte Kabellänge des Verbindungskabels 100 voll ausgenutzt. Eine Lockerung der Bolzenmutter an der Position A oder B würde zu einem Abreißen der Verbindung führen. Zwischen den Positionen c und d herrscht ein minimaler Abstand, so dass ein Vorspannungsverlust erst nach mehr als 60° Verdrehung einer Bolzenmutter detektiert werden würde. Die Bolzenmutter an der Position f hat sich gelockert und dabei den Stecker an der Sollbruchstelle ausgelöst, so dass hier eine Verbindungsunterbrechung 102 vorliegt..

In Figur 4 ist eine alternative Anordnung der Stecker 99' auf den Überwachungskörpern 90 gezeigt. In Fig. 4 hat sich aufgrund einer Lockerung der Bolzenmutter in der Position a bereits eine Verbindungsunterbrechung 102 ergeben. Der Steckverbinder 99' ist in dieser Ausführungsform um etwa 180° gegenüber der gegenüberliegenden Kabelverbindung (Platine mit LED) versetzt angeordnet, also im Vergleich zu Figur 3 etwas zurückversetzt. Zum Auslösen der Steckverbindungen 99' ist eine axiale Zugbelastung vorteilhafter als eine schräge Zugbelastung wie in Figur 3. Eine schräge Zugbelastung bringt einen ungünstigen Kabelzugwinkel mit sich, der dazu führen kann, dass der Stecker möglicherweise nicht auslöst und schlimmstenfalls das Verbindungskabel 100 sich längt. Der Überwachungskörper 90 und das Verbindungskabel 100 müssten dann aufgrund der Überlastung ausgetauscht werden. Dies wird durch die veränderte Steckerposition gemäß Figur 4 vermieden.

Alternativ kann eine Steckverbindung auch mittig zwischen den Überwachungskörpern 90 angeordnet sein, was sicherstellt, dass immer ein Axialzug auf der Steckverbindung vorliegt.

Die Situation wird noch einmal deutlich verbessert, wenn der Überwachungskörper 90 mit zwölf möglichen Steckpositionen ausgestattet ist, da das bei der Konfektion der Länge der Verbindungskabel 100 zu berücksichtigende maximal mögliche Spiel halbiert wird.

In Figur 5 ist schematisch eine herkömmliche Steckverbindung 110 dargestellt, bei der ein Stecker 112 mit einer Feder 116 ausgestattet ist, die in eine Nut 118 einer Buchse 114 eingreift. In diesem Fall ist der Stecker 112 nicht ohne Zerstörung der Feder 116 wieder aus der Buchse 114 entfernbar. Ferner ist es auch nicht möglich, eine wiederholbare Zugkraft einzustellen, bei der sich diese Steckverbindung 110 löst.

Figur 6 zeigt demgegenüber schematisch eine Steckverbindung 120, die ähnlich aufgebaut ist wie die Steckverbindung 110, mit dem Unterschied, dass die Feder 126 des Steckers 122 und die Nut 128 der Buchse 124 in diesem Fall abgerundet sind, sodass die Feder 126 bei Zugbelastung aus der Nut 128 herausrutschen kann, wobei die Zugbelastung, die durch einen Pfeil am Stecker 122 symbolisiert ist, bei der sich der Stecker 122 von der Buchse 124 löst, mit der die Federkraft der Feder 126 sehr gut einstellbar ist. Wenn sich also eine Bolzenmutter gelöst hat und die Steckverbindung 120 sich infolgedessen auch gelöst hat, kann die Steckverbindung 120 nach dem Wiederanziehen der Bolzenverbindung durch einfaches Einstecken des Steckers 122 in die Box an 4 20 wiederhergestellt werden.

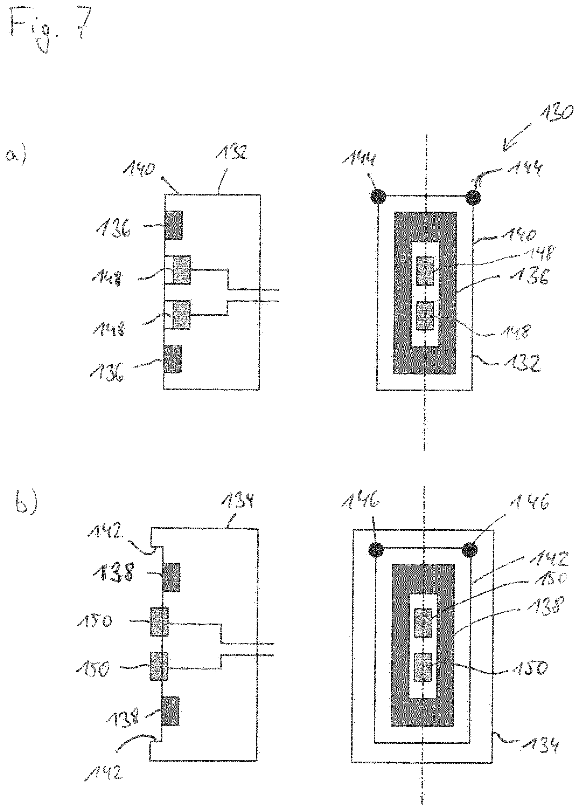

In Figur 7 ist eine magnetische Steckverbindung 130 schematisch dargestellt, wobei in Figur 7a) der Stecker 132 und in Figur 7b) die Buchse 134 näher dargestellt sind. Der Stecker 132 weist eine Außenkontur 41 auf, die in der rechts gezeigten Frontaldarstellung sichtbar an zwei Ecken Abfasungen 144 aufweist, die sicherstellen, dass der Stecker nicht mit falscher Polung in die Buchse 134 eingesteckt wird. Hierzu weist die Buchse 134 eine Innenkontur 142 auf, die ebenfalls passende Abfasungen 146 aufweist.

Als Haltemittel, welches den Stecker 132 und die Buchse 134 mit einer definierten Kraft zusammenhält, weisen der Stecker 132 und die Buchse 134 jeweils einen Magneten 136, 138 auf, die derart gepolt sind, dass sie einander anziehen. In dem Ausführungsbeispiel der Figur 7 haben diese Magneten einen rechteckigen Querschnitt mit rechteckigem Hohlraum im Zentrum. Es kann sich aber auch um mehrere in der Fläche der beiden Komponenten verteilte Magneten handeln.

Zur Herstellung des elektrischen Kontakts weisen der Stecker 132 und die Buchse 134 jeweils Kontaktflächen 148, 150 auf, die ihr jeweiliges Gegenstück kontaktieren. Aus Sicherheitsgründen sind dabei die Kontaktflächen 148 im Stecker 132 gegenüber einer Frontfläche des Steckers 132 zurückversetzt, während die Kontaktflächen 150 der Buchse gegenüber einer Frontfläche der Buchse 134 herausstehend angeordnet sind. Mit dieser Auswahl, den Stecker 132 als "weiblichen" Stecker auszubilden, wird verhindert, dass in dem Fall, dass sich aufgrund einer Lockerung einer Bolzenmutter die Steckverbindung 130 löst, die Kontaktflächen 148 des Steckers 132 mit anderen leitenden Objekten in der Windenergieanlage in Kontakt treten.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein. Im Rahmen der Erfindung sind Merkmale, die mit "insbesondere" oder "vorzugsweise" gekennzeichnet sind, als fakultative Merkmale zu verstehen.

### Bezuaszeichenliste

- 1: Maschinenhaus
- 2: Rotornabe
- 3: Rotorblattlager
- 3': Bohrung
- 4: Rotorblatt
- 5: Flansch
- 6: Lagerung der langsamen Rotorwelle
- 7: Getriebe
- 8: Generator
- 9: Steuerelektronik mit Umrichter
- 10: Hauptträger
- 11: Heckträger
- 12: Azimutantrieb
- 13: Azimutbremse
- 14: Blitzschutz
- 15: Turm
- 16: Anemometer
- 20: Bolzenmutter
- 22: Bolzen
- 90: Überwachungskörper
- 91: Mutternaufsatz
- 92: Bolzenaufnahmeteil
- 93: Arretierelement
- 94: Halterung für Kontaktierung und Platine
- 95: Haltestruktur
- 96: elektrischer Leiter
- 97: Sprengring
- 98: Sollbruchstelle
- 99: Verkabelung
- 99a: LED
- 99': Steckverbindung
- 100: Verbindungskabel
- 102: Verbindungsunterbrechung
- 110: Steckverbindung
- 112: Stecker
- 114: Buchse
- 116: Feder
- 118: Nut
- 120: Steckverbindung
- 122: Stecker
- 124: Buchse
- 126: Feder
- 128: Nut
- 130: magnetische Steckverbindung
- 132: Stecker
- 134: Buchse
- 136: Magnet
- 138: Magnet
- 140: Außenkontur
- 142: Innenkontur
- 144: Abfasung
- 146: Abfasung
- 148: Kontaktfläche
- 150: Kontaktfläche

## Patentansprüche

1. System zur Überwachung einer Flanschverbindung einer Windenergieanlage, umfassend eine Flanschverbindung mit einer Mehrzahl von zueinander benachbart in Öffnungen eines Flansches angeordneten Bolzen (22), die mit Bolzenmuttern (20) und/oder Bolzenköpfen befestigt sind, sowie eine Mehrzahl von Überwachungskörpern (90), die auf Bolzenmuttern (20) und/oder Bolzenköpfen von mehreren, insbesondere zueinander benachbarten, Bolzen (22) in form- und/oder kraftschlüssiger Anlage montiert sind, wobei die Überwachungskörper (90) über Verbindungskabel (100) miteinander zu einer Schaltung, insbesondere Reihenschaltung verbunden sind, **dadurch gekennzeichnet, dass** die Anordnung der Überwachungskörper (90) auf den Bolzenmuttern (20) und/oder Bolzenköpfen und die Länge der Verbindungskabel (100) so gewählt sind, dass bei Rotation einer sich lockernden Bolzenmutter (20) oder eines Bolzenkopfes eines sich lockernden Bolzens und des darauf montierten Überwachungskörpers (90) wenigstens ein mit dem sich mitdrehenden Überwachungskörper (90) verbundenes Verbindungskabel (100) aufgrund steigender Zugspannung auf dem Verbindungskabel (100) gelöst wird, insbesondere bei Überschreitung eines Zugspannungsgrenzwerts, wobei die Verbindungskabel (100) mittels Steckverbindern (120, 130) in den Verbindungskabeln (100) oder an den Überwachungskörpern (90) oder an den Sensoren verbindbar oder verbunden sind, die sich bei steigender axialer Zugspannung lösen.

2. System nach Anspruch 1, **dadurch gekennzeichnet, dass** die Überwachungskörper (90) so ausgebildet sind, dass bei einer Beschädigung oder Zerstörung einer Bolzenmutter (20) oder eines Bolzenkopfes auch der auf der Bolzenmutter (20) oder dem Bolzenkopf montierte Überwachungskörper (90) beschädigt wird, wobei die Überwachungskörper (90) jeweils einen Sensor aufweisen, der zur Feststellung einer strukturellen Integrität des Überwachungskörpers (90) ausgebildet ist, wobei die Verbindungskabel (100) zwischen den Überwachungskörpern (90) die Sensoren an den Überwachungskörpern (90) miteinander verbinden.

3. System nach Anspruch 1 oder 2, **dadurch gekennzeichnet, dass** die Verbindungskabel (100) ohne Zugkraft installiert sind, solange sich keine Bolzenmutter (20) oder kein Bolzen lockert.

4. System nach einem der Ansprüche 1 bis 3, **dadurch gekennzeichnet, dass** eine Rotation einer sich lockernden Bolzenmutter (20) oder eines Bolzenkopfes eines sich lockernden Bolzens von 70°, insbesondere von 40°, insbesondere von 15°, gegenüber einer Ausgangsposition der Bolzenmutter (20) oder des Bolzenkopfes nicht überschritten wird, bevor das Verbindungskabel (100) gelöst wird.

5. System nach einem der Ansprüche 1 bis 4, **dadurch gekennzeichnet, dass** die Verbindungskabel (100) mit einer Sollbruchstelle ausgestattet sind.

6. System nach einem der Ansprüche 1 bis 5, **dadurch gekennzeichnet, dass** die Steckverbinder (120, 130) Feder-Nut-Verbindungen (126, 128) oder magnetische Verbindungen (136, 138) aufweisen, die sich bei Überschreiten eines Zugspannungsgrenzwerts, insbesondere zerstörungsfrei, lösen.

7. System nach einem der Ansprüche 1 bis 6, **dadurch gekennzeichnet, dass** sich bei einer Drehung einer sich lockernden Bolzenmutter (20) oder eines Bolzenkopfes eines sich lockernden Bolzens die Verbindungskabel (100) des sich mitdrehenden Überwachungskörpers (90) und/oder Sensors zu zwei benachbarten Überwachungskörpern (90) und/oder Sensoren lösen, die in einer Schaltung, insbesondere Reihenschaltung der Überwachungskörper (90) und/oder Sensoren vor und hinter dem sich mitdrehenden Überwachungskörper und/oder Sensor angeordnet sind.

8. System nach einem der Ansprüche 1 bis 7, **dadurch gekennzeichnet, dass** die Verbindungskabel (100) auf eine Kabellänge konfektioniert sind, die etwas länger ist als ein ungünstigster Fall bei einer 60°-Rasterung, insbesondere einer 30°-Rasterung, des Überwachungskörpers (90) zur Montage auf einem Bolzenkopf oder eine Bolzenmutter (20), insbesondere einer Sechskantmutter oder einem Sechskantbolzenkopf.

9. Windenergieanlage mit einem System zur Überwachung einer Flanschverbindung nach einem der Ansprüche 1 bis 8.

10. Verfahren zum Überwachen einer Flanschverbindung einer Windenergieanlage, wobei eine oder mehrere Überwachungskörper (90) in einem System nach einem der Ansprüche 1 bis 9 auf eine oder mehrere Bolzenmuttern (20) und/oder Bolzenköpfe wenigstens einer Flanschverbindung einer Windenergieanlage montiert werden und eine Schaltung, insbesondere Reihenschaltung der Überwachungskörper (90) mit Verbindungskabeln (100) so hergestellt wird, dass bei Rotation einer sich lockernden Bolzenmutter (20) oder eines Bolzenkopfes eines sich lockernden Bolzens und des darauf montierten Überwachungskörpers (90) wenigstens ein mit dem sich mitdrehenden Überwachungskörper (90) verbundenes Verbindungskabel (100) aufgrund steigender Zugspannung auf dem Verbindungskabel (100) gelöst wird, wobei bei Lockerung einer Bolzenmutter (20) oder eines Bolzens ein Fehler in der Flanschverbindung signalisiert wird.

11. Verfahren nach Anspruch10, **dadurch gekennzeichnet, dass** die strukturelle Integrität der Überwachungskörper (90) mittels eines oder mehrerer Sensoren an den Überwachungskörpern (90) überwacht wird, wobei bei Beschädigung oder Zerstörung eines oder mehrerer Überwachungskörper (90) ein Fehler in der Flanschverbindung signalisiert wird.

12. Verfahren nach Anspruch 10 oder 11, **dadurch gekennzeichnet, dass** bei Signalisierung einer Beschädigung der Flanschverbindung die Windenergieanlage stillgesetzt wird.

13. Verfahren nach einem der Ansprüche 10 bis 12, **dadurch gekennzeichnet, dass** mehrere Gruppen von Reihenschaltungen eingerichtet werden.

14. Verfahren nach einem der Ansprüche 11 bis 13, **dadurch gekennzeichnet, dass** ein Sensor bei Beschädigung oder Zerstörung eines Überwachungskörpers (90) oder Trennung von einem Verbindungskabel ein Signal aussendet oder eine Beschädigung festgestellt wird, wenn ein Sensor aufgrund einer Unterbrechung seines elektrischen Leiters (96) bei einer Überwachung nicht erkannt wird oder ein kontinuierlich anstehendes Signal unterbrochen wird.

## Claims

1. A system for monitoring a flange connection of a wind energy installation, comprising a flange connection with a plurality of bolts (22) which are arranged adjacent to one another in openings of a flange and which are fastened with bolt nuts (20) and / or bolt heads, as well as a plurality of monitoring bodies (90), which are mounted on bolt nuts (20) and / or bolt heads of a plurality of bolts (22), in particular bolts (22) which are adjacent to one another, in a positive contact and / or a frictional contact, wherein the monitoring bodies (90) are connected to one another via connecting cables (100) so as to form a circuit, in particular a connection in series, **characterised in that** the arrangement of the monitoring bodies (90) on the bolt nuts (20) and / or on the bolt heads and the length of the connecting cables (100) are selected in such a way that, in the event of a rotation of a bolt nut (20) which is becoming loose, or of a bolt head of a bolt which is becoming loose, and of the monitoring body (90) which is mounted thereon, at least one connecting cable (100) which is connected to the monitoring body (90), which monitoring body (90) is also rotating, is released as a result of increasing tensile stress on the connecting cable (100), in particular in the event that a threshold value for tensile stress has been exceeded, wherein the connecting cables (100) can be connected or are connected by means of plug-in connectors (120, 130) in the connecting cables (100) or on the monitoring bodies (90) or on the sensors, which connecting cables (100) are released in the event that the axial tensile stress increases.

2. The system according to claim 1, **characterised in that** the monitoring bodies (90) are constructed in such a way that, in the event of damage to, or destruction of, a bolt nut (20) or a bolt head, the monitoring body (90) which is mounted on the bolt nut (20) or on the bolt head is also damaged, wherein the monitoring bodies (90) each comprise a sensor which is configured to detect a structural integrity of the monitoring body (90), wherein the connecting cables (100) between the monitoring bodies (90) connect the sensors on the monitoring bodies (90) to one another.

3. The system according to claim 1 or 2, **characterised in that** the connecting cables (100) are installed without tensile force as long as no bolt nut (20) or no bolt becomes loose.

4. The system according to any one of the claims 1 to 3, **characterised in that** a rotation of a bolt nut (20) which is becoming loose, or of a bolt head of a bolt which is becoming loose, does not exceed 70°, in particular 40°, in particular 15°, with respect to an initial position of the bolt nut (20) or of the bolt head, before the connecting cable (100) is released.

5. The system according to any one of the claims 1 to 4, **characterised in that** the connecting cables (100) are provided with a predetermined point of weakness.

6. The system according to any one of the claims 1 to 5, **characterised in that** the plug-in connectors (120, 130) have tongue and groove connections (126, 128) or magnetic connections (136, 138) which are released, in particular in a non-destructive manner, in the event that a tensile stress threshold value has been exceeded.

7. The system according to any one of the claims 1 to 6, **characterised in that**, in the event of a rotation of a bolt nut (20) which is becoming loose, or of a bolt head of a bolt which is becoming loose, the connecting cables (100) of the monitoring body (90), which monitoring body (90) is also rotating, and / or of a sensor to two adjacent monitoring bodies (90) and / or sensors, which are arranged in a circuit, in particular in a connection in series, of the monitoring bodies (90) and / or of the sensors, in front of, and behind, the monitoring body, which monitoring body (90) is also rotating, and / or sensor, are released.

8. The system according to any one of the claims 1 to 7, **characterised in that** the connecting cables (100) are manufactured so as to have a cable length which is slightly longer than a worst case at a 60° pitch, in particular a 30° pitch, of the monitoring body (90) for mounting on a bolt head or on a bolt nut (20), in particular on a hexagonal nut or on a hexagonal bolt head.

9. A wind energy installation comprising a system for monitoring a flange connection in accordance with any one of the claims 1 to 8.

10. A method of monitoring a flange connection of a wind energy installation, wherein one or more monitoring bodies (90) are mounted on one or more bolt nuts (20) and / or bolt heads of at least one flange connection of a wind energy installation in a system in accordance with any one of the claims 1 to 9, and wherein a circuit, in particular a connection in series, of the monitoring bodies (90) is produced with connecting cables (100) in such a way that, in the event of a rotation of a bolt nut (20) which is becoming loose, or of a bolt head of a bolt which is becoming loose and of the monitoring body (90) mounted thereon, at least one connecting cable (100) which is connected to the monitoring body (90), which monitoring body (90) is also rotating, is released as a result of the increasing tensile stress in the connecting cable (100), wherein, in the event of a bolt nut (20) or of a bolt becoming loose, a fault in the flange connection is indicated.

11. The method according to claim 10, **characterised in that** the structural integrity of the monitoring bodies (90) is monitored by means of one or more sensors on the monitoring bodies (90), wherein, in the event of damage or destruction of one or more monitoring bodies (90), a fault in the flange connection is indicated.

12. The method according to claim 10 or 11, **characterised in that** the wind energy installation is brought to a halt in the event that damage to the flange connection is indicated.

13. The method according to any one of the claims 10 to 12, **characterised in that** a plurality of groups of connections in series are established.

14. The method according to any one of the claims 11 to 13, **characterised in that** a sensor emits a signal in the event of damage to, or destruction of, a monitoring body (90) or disconnection from a connecting cable, or damage is detected if a sensor is not detected during monitoring as a result of an interruption of its electrical conductor (96) or if a continuously present signal is interrupted.

## Revendications

1. Système de surveillance d'un raccord à bride d'une éolienne, comprenant un raccord à bride avec une pluralité de boulons (22) agencés de manière adjacente les uns aux autres dans des ouvertures d'une bride, qui sont fixés avec des écrous de boulon (20) et/ou têtes de boulon, ainsi qu'une pluralité de corps de surveillance (90), qui sont montés sur des écrous de boulon (20) et/ou têtes de boulon de plusieurs boulons (22), en particulier adjacents les uns aux autres, en appui par forme et/ou par force, dans lequel les corps de surveillance (90) sont reliés les uns aux autres en un circuit, en particulier circuit en série, par le biais de câbles de liaison (100), **caractérisé en ce que** l'agencement des corps de surveillance (90) sur les écrous de boulon (20) et/ou têtes de boulon et la longueur des câbles de liaison (100) sont sélectionnés de sorte que lors de la rotation d'un écrou de boulon (20) se desserrant ou d'une tête de boulon d'un boulon se desserrant et du corps de surveillance (90) monté dessus, au moins un câble de liaison (100) relié au corps de surveillance (90) tournant simultanément est détaché en raison de la contrainte de traction croissante sur le câble de liaison (100), en particulier en cas de dépassement d'une valeur limite de contrainte de traction, dans lequel les câbles de liaison (100) peuvent être reliés ou sont reliés au moyen de connecteurs enfichables (120, 130) dans les câbles de liaison (100) ou aux corps de surveillance (90) ou aux capteurs, qui se détachent lors de la contrainte de traction axiale croissante.

2. Système selon la revendication 1, **caractérisé en ce que** les corps de surveillance (90) sont réalisés de sorte que lors d'un endommagement ou d'une destruction d'un écrou de boulon (20) ou d'une tête de boulon, le corps de surveillance (90) monté sur l'écrou de boulon (20) ou la tête de boulon est également endommagé, dans lequel les corps de surveillance (90) présentent respectivement un capteur, qui est réalisé pour la constatation d'une intégrité structurelle du corps de surveillance (90), dans lequel les câbles de liaison (100) entre les corps de surveillance (90) relient les uns aux autres les capteurs aux corps de surveillance (90).

3. Système selon la revendication 1 ou 2, **caractérisé en ce que** les câbles de liaison (100) sont installés sans contrainte de traction, aussi longtemps qu'aucun écrou de boulon (20) ou qu'aucun boulon ne se desserre.

4. Système selon l'une quelconque des revendications 1 à 3, **caractérisé en ce qu'**une rotation d'un écrou de boulon (20) se desserrant ou d'une tête de boulon d'un boulon se desserrant de 70°, en particulier de 40°, en particulier de 15°, par rapport à une position initiale de l'écrou de boulon (20) ou de la tête de boulon n'est pas dépassée, avant que le câble de liaison (100) ne se détache.

5. Système selon l'une quelconque des revendications 1 à 4, **caractérisé en ce que** les câbles de liaison (100) sont dotés d'un point de rupture théorique.

6. Système selon l'une quelconque des revendications 1 à 5, **caractérisé en ce que** les connecteurs enfichables (120, 130) présentent des liaisons rainure-languette (126, 128) ou des liaisons magnétiques (136, 138), qui se détachent lors du dépassement d'une valeur limite de contrainte de traction, en particulier sans destruction.

7. Système selon l'une quelconque des revendications 1 à 6, **caractérisé en ce que** lors d'une rotation d'un écrou de boulon (20) se desserrant ou d'une tête de boulon d'un boulon se desserrant, les câbles de liaison (100) du corps de surveillance (90) et/ou capteur tournant simultanément par rapport à deux corps de surveillance (90) et/ou capteurs adjacents se détachent, qui sont agencés en un circuit, en particulier circuit en série des corps de surveillance (90) et/ou capteurs en amont et en aval du corps de surveillance et/ou capteur tournant simultanément.

8. Système selon l'une quelconque des revendications 1 à 7, **caractérisé en ce que** les câbles de liaison (100) sont confectionnés sur une longueur de câble, qui est un peu plus longue qu'un cas défavorable lors d'un tramage à 60°, en particulier d'un tramage à 30°, du corps de surveillance (90) à monter sur une tête de boulon ou un écrou de boulon (20), en particulier un écrou à six pans ou une tête de boulon à six pans.

9. Éolienne avec un système de surveillance d'un raccord à bride selon l'une quelconque des revendications 1 à 8.

10. Procédé de surveillance d'un raccord à bride d'une éolienne, dans lequel un ou plusieurs corps de surveillance (90) dans un système selon l'une quelconque des revendications 1 à 9 sont montés sur un ou plusieurs écrous de boulon (20) et/ou têtes de boulon d'au moins un raccord à bride d'une éolienne et un circuit, en particulier circuit en série des corps de surveillance (90) est réalisé avec des câbles de liaison (100) de sorte que lors de la rotation d'un écrou de boulon (20) se desserrant ou d'une tête de boulon d'un écrou se desserrant et du corps de surveillance (90) monté dessus, au moins un câble de liaison (100) relié au corps de surveillance (90) tournant simultanément est détaché en raison de la contrainte de traction croissante sur le câble de liaison (100), dans lequel lors du desserrage d'un écrou de boulon (20) ou d'un boulon, une erreur est signalée dans le raccord à bride.

11. Procédé selon la revendication 10, **caractérisé en ce que** l'intégrité structurelle des corps de surveillance (90) est surveillée au moyen d'un ou plusieurs capteurs sur les corps de surveillance (90), dans lequel lors de l'endommagement ou de la destruction d'un ou plusieurs corps de surveillance (90), une erreur est signalée dans le raccord à bride.

12. Procédé selon la revendication 10 ou 11, **caractérisé en ce que** lors de la signalisation d'un endommagement du raccord à bride, l'éolienne est arrêtée.

13. Procédé selon l'une quelconque des revendications 10 à 12, **caractérisé en ce que** plusieurs groupes de circuits en série sont aménagés.

14. Procédé selon l'une quelconque des revendications 11 à 13, **caractérisé en ce qu'**un capteur émet un signal lors de l'endommagement ou de la destruction d'un corps de surveillance (90) ou de la séparation d'un câble de liaison ou un endommagement est constaté, lorsqu'un capteur n'est pas reconnu en raison d'une interruption de son conducteur électrique (96) lors d'une surveillance ou un signal présent en continu est interrompu.
